# EUROPÄISCHE PATENTANMELDUNG

(11) **EP 1 759 906 A1**
(43) Veröffentlichungstag der Anmeldung: **07.03.2007**
(21) Anmeldenummer: 06017917.3
(22) Anmeldetag: 28.08.2006
(51) Int. Cl.: B60J 7/20, B60J 7/12

(54) **Verdeckbezug für ein Fahrzeug, insbesondere für ein Kraftfahrzeug mit Klappverdeck**

(30) Priorität: 02.09.2005 DE 102005041743
(71) Anmelder: Bayerische Motoren Werke Aktiengesellschaft, 80809 München (DE)
(72) Erfinder: Lischo, Bernd, 82362 Weilheim (DE)

(57) **Zusammenfassung**

Verdeckbezug für ein Fahrzeug, insbesondere für ein Kraftfahrzeug mit Klappverdeck, mit einem eine Außenfläche bildenden Außenwandteil (1), einem innen an das Außenwandteil (1) angrenzenden Zwischenteil (2) und einem innen an das Zwischenteil (2) angrenzenden Schaumteil (3), wobei das Außenwandteil (1) mit dem Zwischenteil (2) und das Zwischenteil (2) mit dem Schaumteil (3) verbunden sind. Das Außenwandteil (1) ist im wesentlichen aus Leder (1) gefertigt.

## Beschreibung

Die Erfindung betrifft einen Verdeckbezug für ein Fahrzeug, insbesondere für ein Kraftfahrzeug mit Klappverdeck, mit den im Oberbegriff des Patentanspruches 1 angegebenen Merkmalen.

Ein derartiger Verdeckbezug weist in der EP 1 285 800 A2 eine Außenhaut auf, die durch einen hoch dehnfähigen Oberstoff zum Beispiel aus einem Gewebe mit dem Werkstoff Polyacryl gebildet ist. Bei einer Ausführung schließen sich jeweils von innen eine thermoplastische Folie und eine Gießharz-Schaumschicht sowie eine weitere Folie aus Polyurethan an. Der hoch dehnfähige Oberstoff dürfte sich nach einiger Zeit zumindest lokal von der thermoplastischen Folie lösen und dann durch Flatterbewegungen störende Windgeräusche verursachen. Die Eigenschaften des O-berstoffes dürften sich bei unterschiedlichen Umgebungstemperaturen und unterschiedlicher Luftfeuchtigkeit sowie einer unterschiedlichen Sonneneinstrahlung erheblich, eventuell bleibend ändern. Durch Scheuerbewegungen am Oberstoff, beispielsweise beim Durchfahren einer Waschstraße, können optisch störende Glanzstellen auf dem Oberstoff entstehen.

Der Erfindung liegt die Aufgabe zu Grunde, einen Verdeckbezug für ein Fahrzeug mit den Merkmalen im Oberbegriff des Patentanspruches 1 anzugeben, der diese Nachteile nicht oder weniger störend aufweist.

Diese Aufgabe ist durch die im Patentanspruch 1 angegebenen Merkmale gelöst. Vorteilhafte Ausgestaltungen der Erfindung sind Gegenstand der Unteransprüche.

Die Außenhaut aus Leder ist biegsam und ermöglicht dadurch ein Falten des Verdecks. Das Leder ist jedoch nicht hoch dehnbar und kann dadurch keine oder kaum eine Flatterbewegung ausführen, selbst wenn sich die Außenhaut lokal von dem Zwischenteil lösen sollte. Das Leder kann intensiver mit dem Zwischenteil und/oder dem Schaumteil verbunden werden, beispielsweise indem ein bei der Fertigung anfangs weiches Material des Zwischenteiles bzw. des Schaumteiles in das Leder etwas eindringt. Durch das in das Leder eingedrungene Material und/oder eine Imprägnierung und/oder Behandlung des Leders kann das Leder wasserfest und gegenüber Klimaänderungen beständig oder beständiger ausgebildet sein. Der Verdeckbezug kann einem Fahrzeug mit Verdeck, beispielsweise einem Kraftfahrzeug mit einem Falt- oder Klappverdeck, ein ansprechendes Aussehen vermitteln und bei geschlossenem Verdeck die Fahrzeuginsaßen vor Witterungseinflüssen schützen. Das Verdeck ist für beliebige Fahrzeuge mit einem feststehenden oder falt- bzw. klappbaren Verdeck geeignet.

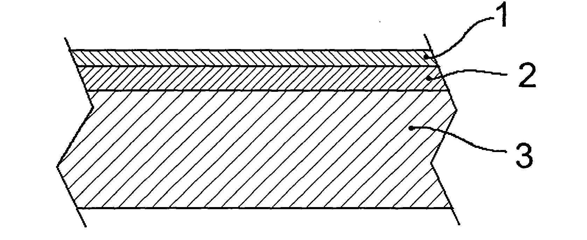

Ein Ausführungsbeispiel der Erfindung wird anhand einer Zeichnung mit einer einzigen Figur näher erläutert, die einen Ausschnitt des Verdeckbezugs eines Kraftfahrzeugs mit einem Falt- oder Klappverdeck in einem Querschnitt darstellt.

Der in der einzigen Figur in einem Ausschnitt dargestellte Verdeckbezug ist an einem Kraftfahrzeug mit einem nicht dargestellten Falt- oder Klappverdeck vorgesehen und weist ein Außenwandteil auf, das im wesentlichen aus Leder 1 gefertigt ist. Das Leder 1 ist zumindest teilweise wasserdicht imprägniert, ausreichend schrumpffest und gegenüber Änderungen der Umgebungstemperatur beständig sowie weitgehend lichtbeständig ausgebildet bzw. behandelt. Das Leder 1 ist beispielsweise ein Anilin-Leder.

An das Leder 1 grenzt von innen ein Zwischenteil 2 an, das im wesentlichen aus einem thermoplastischen Polyurethan gefertigt ist. Das Polyurethan 2 ist über ein Werkzeug, in das zuvor das Leder 1 eingelegt wurde, weich auf die Innenseite des Leders 1 aufgebracht und bildet ausgehärtet eine mit dem Leder 1 haftend oder klebend verbundene Folie, die weitgehend wasserdicht ist.

Beim Aufbringen des Zwischenteiles 2 aus thermoplastischem Polyurethan auf das Leder 1 ist das noch weiche Material des Zwischenteiles 2 etwas in das Material bzw. die Poren des Leders 1 eingedrungen, wodurch nach dem Aushärten des Zwischenteiles 2 eine festere Verbindung des durch das Herstellverfahren mit der Innenseite des Leders 1 haftend oder klebend verbundenen Zwischenteiles 2 mit dem Leder 1 erreicht ist.

An die Innenseite des Zwischenteiles 2 grenzt ein Schaumteil 3 an, das im wesentlichen aus einem Polyurethan-Schaum gefertigt ist und besonders wirksam akustisch dämpfend wirkt.

Beim Aufbringen des Zwischenteiles 2 und/oder Schaumteiles 3 und/oder einer Kleber- und/oder Haftschicht auf das Leder 1 kann das beispielsweise noch weiche Material des Zwischenteiles 2 bzw. Schaumteiles 3 bzw. der Kleber- und/oder Haftschicht etwas in das Material bzw. die Poren des Leders 1 eindringen oder lediglich bzw. zusätzlich mit der Innenseite des Leders 1 haftend oder klebend verbinden.

Das Zwischenteil 2 übernimmt die Funktion der Tragstruktur, unterstützt von dem als Schalldämmung wirkenden Schaumteil 3. Durch das innen geschlossene, beispielsweise hinterspritzte Leder 1 ist das Leder 1 absolut wasserdicht. Wasser kann nur eingeschränkt im Leder 1 aufgenommen werden. Eine schnelle Abtrocknung bei Nässe ist die Folge. Dies ist beispielsweise vorteilhaft, wenn der Verdeckbezug an einem Kraftfahrzeug mit Klapp- oder Faltverdeck vorgesehen ist und das Klapp-oder Faltverdeck nass in einen Verdeckkasten eingebracht wird. Durch die intensive Verbindung des Leders 1 mit dem Zwischenteil 2 bzw. mit dem Schaumteil 3 sind eine eventuelle Schrumpfung und/oder Versprödung zumindest vermindert. Der Verdeckbezug ist für Großserien verwendbar.

Auf dem Leder und/oder auf dem Zwischenteil könnte auch eine ein- oder mehrschichtige Kleber- und/oder Haftschicht aufgebracht sein, die mit dem Zwischenteil bzw. dem Schaumteil verbunden werden kann. Ein Verbinden des Leders oder der gegebenenfalls darauf aufgetragenen Kleber- und/oder Haftschicht mit dem Zwischenteil bzw. mit dem Schaumteil erfolgt selbsttätig, wenn die Kleber- und/oder Haftschicht bzw. die Zwischenschicht bzw. das Schaumteil beispielsweise nach dem Auftragen auf das Leder bzw. auf die Kleber- und/oder Haftschicht bzw. auf das Zwischenteil eine ausreichende Haft- und/oder Klebereigenschaft aufweist.

Das Zwischenteil kann auch ein in das Schaumteil eingebettetes Netz bilden, das von Netzfäden umschlossene Durchtrittsöffnungen aufweist, durch die hindurch das Schaumteil mit dem Leder bzw. der gegebenenfalls darauf angeordneten ein- oder mehrschichtigen Kleber- und/oder Haftschicht verbunden ist. Das Netz kann mit der Innenseite des Leders oder gegebenenfalls der darauf angeordneten ein- oder mehrschichtigen Kleber- und/oder Haftschicht haftend oder klebend verbunden sein. Das Netz kann an zumindest einer Stelle mit dem Leder verbunden, beispielsweise an Randbereichen des Netzes mit dem Leder vernäht sein.

## Patentansprüche

1. Verdeckbezug für ein Fahrzeug, insbesondere für ein Kraftfahrzeug mit Klappverdeck, mit einem eine Außenfläche bildenden Außenwandteil, einem innen an das Außenwandteil angrenzenden Zwischenteil und einem innen an das Zwischenteil angrenzenden Schaumteil, wobei das Außenwandteil mit dem Zwischenteil und das Zwischenteil mit dem Schaumteil verbunden sind, **dadurch gekennzeichnet, dass** das Außenwandteil im wesentlichen aus Leder (1) gefertigt ist.

2. Verdeckbezug nach Anspruch 1, **dadurch gekennzeichnet, dass** das Leder (1) wasserdicht imprägniert und/oder das Zwischenteil (2) wasserdicht ausgebildet sind.

3. Verdeckbezug nach Anspruch 1 oder 2, **dadurch gekennzeichnet, dass** das Leder (1) schrumpffest und/oder gegenüber Änderungen der Umgebungstemperatur beständig und/oder lichtbeständig ausgebildet oder behandelt ist.

4. Verdeckbezug nach einem der Ansprüche 1 bis 3, **dadurch gekennzeichnet, dass** das Leder (1) ein Anilin-Leder ist.

5. Verdeckbezug nach einem der Ansprüche 1 bis 4, **dadurch gekennzeichnet,**
**dass** das Zwischenteil (2) im wesentlichen aus einem thermoplastischen Polyurethan gefertigt ist, das weich auf die Innenseite des Leders (1) oder gegebenenfalls auf eine darauf angeordnete ein- oder mehrschichtige Kleber-und/oder Haftschicht aufgebracht ist und ausgehärtet eine mit dem Leder (1) bzw. der Kleber- und/oder Haftschicht haftend oder klebend verbundene Folie bildet oder zusätzlich die Folie weitgehend wasserdicht ist.

6. Verdeckbezug nach einem der Ansprüche 1 bis 4, **dadurch gekennzeichnet,**
**dass** das Zwischenteil ein in das Schaumteil eingebettetes Netz bildet, das von Netzfäden umschlossene Durchtrittsöffnungen aufweist durch die hindurch das Schaumteil mit dem Leder bzw. der gegebenenfalls darauf angeordneten ein- oder mehrschichtigen Kleber- und/oder Haftschicht verbunden ist.

7. Verdeckbezug nach Anspruch 6, **dadurch gekennzeichnet, dass** das Netz mit der Innenseite des Leders oder gegebenenfalls der darauf angeordneten ein-oder mehrschichtigen Kleber- und/oder Haftschicht haftend oder klebend verbunden ist.

8. Verdeckbezug nach Anspruch 7, **dadurch gekennzeichnet, dass** das Netz an zumindest einer Stelle mit dem Leder vernäht ist.

9. Verdeckbezug nach einem der Ansprüche 1 bis 8, **dadurch gekennzeichnet, dass** beim Aufbringen des Zwischenteiles (2) und/oder Schaumteiles (3) und/oder der Kleber- und/oder Haftschicht auf das Leder (1) das noch weiche Material des Zwischenteiles (2) bzw. Schaumteiles (3) bzw. der Kleber-und/oder Haftschicht etwas in das Material bzw. die Poren des Leders (1) eindringt.

10. Verdeckbezug nach einem der Ansprüche 1 bis 9, **dadurch gekennzeichnet, dass** das Schaumteil (3) im wesentlichen aus einem Polyurethan-Schaum gefertigt ist.
